# FASCICULE DE BREVET EUROPEEN

(11) **EP 3 283 760 B1**
(45) Date de publication et mention de la délivrance du brevet: **10.04.2019**
(21) Numéro de dépôt: 16722288.4
(22) Date de dépôt: 13.04.2016
(51) Int. Cl.: F03B 17/02

(54) **SYSTÈME DE PRODUCTION D'ÉNERGIE**
ENERGIEERZEUGUNGSSYSTEM
POWER PRODUCTION SYSTEM

(30) Priorité: 14.04.2015 FR 1553265
(43) Date de publication de la demande: 21.02.2018
(73) Titulaire: Gourault, Dominique-José, 89170 Saint Fargeau (FR)
(72) Inventeur: Gourault, Dominique-José, 89170 Saint Fargeau (FR)
(74) Mandataire: Oudin, Stéphane
(86) Numéro de dépôt international: PCT/FR2016/050858
(87) Numéro de publication internationale: WO 2016/166476

(56) Documents cités:
- FR-A- 909 615
- US-A- 474 238
- US-A- 4 674 281
- US-A1- 2012 006 015
- US-A1- 2013 154 270

## Description

### Domaine technique

La présente invention concerne un système de production d'énergie électrique utilisant au moins deux forces permanentes et non polluantes telles que l'attraction terrestre et la poussée d'Archimède.

### Technique antérieure

De nos jours, il apparaît comme vital de trouver des moyens de production d'énergie électrique n'utilisant pas les sources d'énergie traditionnellement utilisées, compte tenu notamment de la raréfaction programmée des sources d'énergies fossiles. De plus, ces sources d'énergie traditionnelles présentent l'inconvénient majeur d'être particulièrement polluantes en termes d'émission gazeuse et de rejet dans l'atmosphère ou sur terre de déchets difficilement recyclables. Ceci est particulièrement le cas, pour les centrales nucléaires.

Le développement de systèmes de production d'énergie électrique à partir de sources d'énergie renouvelables s'est par conséquent, depuis quelques années, accéléré. Ainsi, on a vu le nombre de champs de panneaux solaires et/ou de parcs éoliens connaitre une croissance importante ou encore de générateurs hydroélectriques à chute d'eau tels que celui décrit dans la demande de brevet américain US 2012/006015.

Toutefois, ces systèmes de production d'énergie électrique sont complexes à fabriquer et n'ont pas toujours un rendement important, car leur rendement est tributaire des conditions météorologiques (puissance et durée de l'ensoleillement et force du vent) du site où ces systèmes de production d'énergie électrique sont implantés. De ce fait, ce type de systèmes de production d'énergie électrique, qui ne peut pas être implanté partout, nécessite de réaliser, avant toute implantation, une étude pour vérifier si les conditions météorologiques d'un site donné permettent d'implanter de façon rentable ledit système de production d'énergie électrique.

### Exposé de l'invention

Le but de la présente invention est donc de pallier les inconvénients précédemment cités et de proposer une alternative aux systèmes de production d'énergie électrique connus utilisant au moins deux forces permanentes telles que l'attraction terrestre et la poussée d'Archimède ; cette alternative permettant de générer de l'énergie électrique à partir d'une source d'énergie renouvelable sans aucun effet néfaste sur ladite source et sans aucun rejet polluant dans l'atmosphère ou sur terre, de façon régulière sans aucune dépendance avec les conditions météorologiques du site d'implantation.

Conformément au premier objet de l'invention, il est donc proposé un système de production d'énergie électrique comportant au moins un ensemble comprenant un premier module et un deuxième module, fonctionnant de manière antagoniste, lesdits premier et deuxième modules étant identiques, symétriques et comprenant chacun respectivement une cuve principale raccordée respectivement, d'une part, à un premier ou deuxième réservoir de liquide et, d'autre part, à une première ou deuxième évacuation, et apte à être remplie dudit liquide ou vidée, ledit système étant remarquable en ce que lesdits premier deuxième modules comprennent chacun respectivement :
- une cuve ballast externe apte à être remplie du liquide contenu dans la cuve principale ou vidée pour se déplacer à l'intérieur de la cuve principale,
- une cuve ballast interne apte à être remplie ou vidée du liquide contenu dans la cuve ballast interne de l'autre module pour se déplacer à l'intérieur de la cuve ballast externe,

- une jupe ballast suspendue à ladite cuve ballast externe et apte à être remplie ou vidée du liquide contenu dans la jupe ballast de l'autre module pour se déployer ou se replier verticalement,
- des premiers dispositifs de transmission reliant la cuve ballast externe à la cuve principale et permettant de démultiplier et de transmettre le mouvement des cuves ballasts externes à des alternateurs, et
- des deuxièmes dispositifs de transmission reliant la cuve ballast interne à la cuve ballast externe et permettant de démultiplier et de transmettre le mouvement des cuves ballasts internes à des alternateurs.

Ledit système de production d'énergie électrique comporte de préférence entre les premier et deuxième modules :
- une vanne inférieure apte à mettre en relation les parties inférieures des cuves principales,
- une vanne supérieure apte à mettre en relation les parties supérieures des cuves principales,
- un premier tube émissaire disposé entre les deux vannes inférieure et supérieure, et apte à mettre en relation sous certaines conditions les cuves ballasts internes,
- un deuxième tube émissaire disposé en dessous de la vanne inférieure, et apte à mettre en relation les parties inférieures des jupes ballasts, et
- un tube d'évent extensible reliant les dessus des cuves ballasts externes de sorte à permettre le transfert de l'air contenu dans lesdites cuves ballasts externes en fonction du remplissage ou du vidage de ces dernières.

De manière avantageuse, la cuve principale comporte :
- une première vanne disposée en partie inférieure permettant le remplissage de ladite cuve principale en la mettant en relation avec un premier, respectivement deuxième, réservoir,
- une deuxième vanne disposée sur son fond et permettant le vidage de cette dernière en la mettant en relation avec la première, respectivement deuxième, évacuation.

De manière avantageuse, chacun des premiers et deuxièmes dispositifs de transmission comportent au moins un organe de freinage.

La cuve ballast externe comprend de préférence :
- une première vanne disposée en partie inférieure et permettant le remplissage ou le vidage de la cuve ballast externe en la mettant en relation avec la cuve principale,
- une deuxième vanne inférieure permettant le vidage de la cuve ballast interne en mettant en relation, par l'intermédiaire du tube émissaire sous certaines conditions, la partie inférieure de ladite cuve ballast interne et la partie supérieure de la cuve ballast interne, et
- une troisième vanne supérieure permettant le remplissage de la cuve ballast interne en mettant en relation, par l'intermédiaire du tube émissaire sous certaines conditions, la partie supérieure de ladite cuve ballast interne et la partie inférieure de la cuve ballast interne.

Par ailleurs, la cuve ballast interne comprend avantageusement :
- un premier tube s'étendant en partie inférieure et permettant le vidage de ladite cuve ballast interne en mettant en relation, par l'intermédiaire de la deuxième vanne et du tube émissaire sous certaines conditions, avec la partie supérieure de la cuve ballast interne, et
- un deuxième tube s'étendant en partie supérieure et permettant le remplissage de ladite cuve ballast interne en la mettant en relation, par l'intermédiaire de la deuxième vanne et du tube émissaire sous certaines conditions, avec la partie inférieure de la cuve ballast interne.

De même, la jupe ballast comprend une vanne disposée en partie inférieure pour la raccorder au deuxième tube émissaire et permettant le remplissage ou le vidage de la jupe ballast.

Selon un mode de réalisation préféré, la jupe ballast, qui comporte en partie inférieure un plancher rigide et des bords latéraux verticalement déformables, est solidaire par sa face supérieure du fond de la cuve ballast externe et est suspendue à cette dernière par des suspentes télescopiques fixées sur le plancher de sorte à maintenir ce dernier à distance fixe et constante du fond de la cuve principale.

En outre, les premiers dispositifs de transmission sont du type hydraulique et comportent chacun au moins un premier et un deuxième vérins aptes chacun à générer un fluide sous pression afin d'actionner un moteur hydraulique raccordé à l'alternateur, ledit premier vérin comprenant un corps cylindrique fixé sur le fond respectif de la cuve principale dans lequel est mobile un piston solidaire de la cuve ballast externe associée, le deuxième vérin comprenant un corps cylindrique fixé sur la face supérieure respective de ladite cuve principale dans lequel est mobile un piston solidaire de la cuve ballast externe associée, les premier et deuxième vérins de la cuve ballast externe étant reliés par des circuits hydrauliques avec les premier et deuxième vérins de la cuve ballast externe.

De même, les deuxièmes dispositifs de transmission sont du type hydrauliques et comportent chacun au moins un premier et un deuxième vérins aptes chacun à générer un fluide sous pression afin d'actionner un moteur hydraulique raccordé à l'alternateur, ledit premier vérin comprenant un corps cylindrique fixé sur le fond respectif de ladite cuve ballast externe dans lequel est mobile un piston solidaire de la cuve ballast interne associée, ledit deuxième vérin comprend un corps cylindrique fixé sur la face supérieure respective de ladite cuve ballast externe dans lequel est mobile un piston solidaire de la cuve ballast interne associée, les premier et deuxième vérins de la cuve ballast externe étant reliés entre eux par des circuits hydrauliques.

Selon cette dernière configuration, l'organe de freinage des premiers et deuxièmes dispositifs de transmission est avantageusement une vanne-frein équipant leurs circuits hydrauliques.

Selon une variante de réalisation, le système de production d'énergie électrique comporte une pluralité d'ensembles comprenant un premier module et un deuxième module et en ce que le mouvement des éléments du premier desdits ensembles est décalé séquentiellement par rapport au mouvement des éléments du deuxième ensemble, le mouvement des éléments de ce dernier étant décalé séquentiellement par rapport au mouvement des éléments du troisième ensemble, et ainsi de suite.

De manière avantageuse, chacune des premières et deuxièmes vannes des cuves principales, des premières et deuxièmes vannes des cuves ballasts externes et des vannes inférieure et supérieure est couplée à un alternateur.

Selon un variante de réalisation, lesdits premier et deuxième modules comprennent chacun respectivement une jupe ballast supérieure disposée sur le dessus de la cuve ballast externe et apte à être remplie ou vidée du liquide contenu dans la jupe ballast, nommée alors jupe ballast inférieure, du même module pour se déployer ou se replier verticalement.

La jupe ballast supérieure, qui comporte en partie supérieure un plafond rigide et des bords latéraux verticalement déformables, est de préférence solidaire par sa face inférieure à la cuve ballast externe et est suspendue par des suspentes télescopiques fixées sur ladite cuve ballast externe.

### Description sommaire des figures

D'autres avantages et caractéristiques ressortiront mieux de la description qui va suivre, d'un exemple particulier de réalisation, donné à titre d'exemple non limitatif, d'un système de production d'énergie électrique conforme à l'invention, en référence aux dessins annexés sur lesquels :
- la figure 1 est une vue schématique en coupe d'un système de production d'énergie électrique conforme à l'invention,
- les figures 2A à 2N sont des vues schématiques en coupe du système de la figure 1 à différentes séquences d'un cycle de production d'énergie.

### Meilleure manière de réaliser l'invention technique

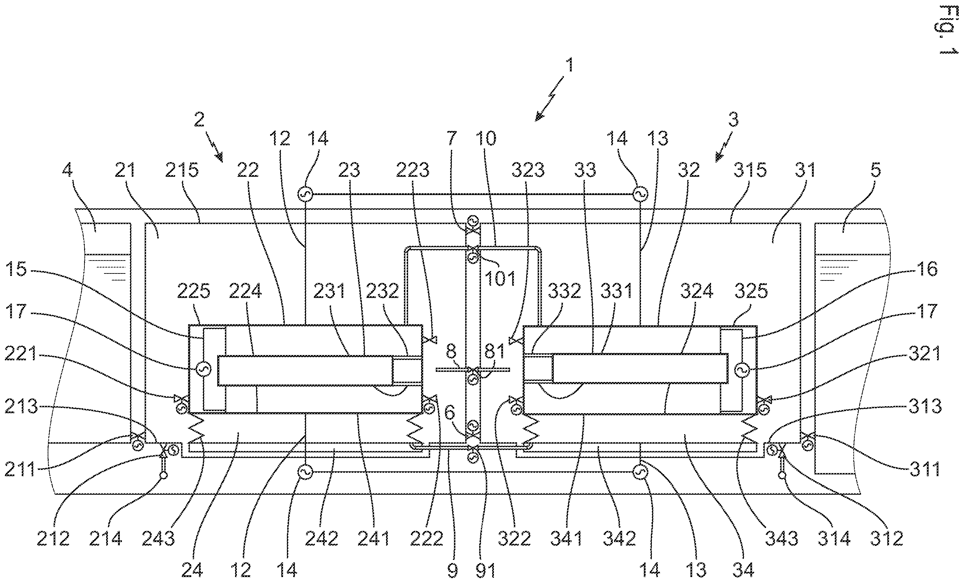

En référence à la figure 1, le système 1 de production d'énergie électrique conforme à l'invention comprenant un premier module 2 et un deuxième module 3 disposés de façon adjacente.

Ledit premier module 2 comporte une cuve principale 21 apte à contenir un liquide, de préférence de l'eau, une cuve ballast externe 22 disposée à l'intérieur de ladite cuve principale 21, une cuve ballast interne 23 disposée à l'intérieur de ladite cuve ballast 22 et une jupe ballast 24 à géométrie variable suspendue à la cuve ballast 22, lesdites cuve principale 21, cuve ballast 22, cuve ballast interne 23 et jupe ballast 24 étant aptes à se remplir et à se vider dudit liquide.

Par analogie, ledit deuxième module 2 comporte une cuve principale 31, une cuve ballast externe 32, une cuve ballast interne 33 et une jupe ballast 34 à géométrie variable, les cuves principale 31, ballast externe 32 et interne 33 et la jupe ballast 34 étant de préférence identiques respectivement aux cuves principale 31, ballast externe 32 et interne 33 et à la jupe ballast 34 du premier module 2.

Chacune des cuves ballasts externes 22,32 est de forme générale parallélépipédique, réalisée à partie de métal ou de matériaux composites, et apte à recevoir un grand volume d'eau afin d'obtenir une masse importante.

Chacune des cuves ballasts internes 23,33 est de constitution et de géométrie analogues à la cuve ballast externe 22,32 associée.

Les cuves ballasts externes 22,32 et les cuves ballasts internes 22,32 sont mobiles verticalement sous l'effet de la gravité ou de la poussée d'Archimède.

Lesdits premier et deuxième modules 2,3 comportent chacun des vannes d'entrée et/ou de sortie de liquide et sont connectés entre eux pour fonctionner de manière antagoniste, c'est-à-dire que lorsque la cuve ou jupe du premier module 2 se remplit, la cuve ou jupe analogue du deuxième module 3 se vide et/ou lorsque la cuve ou jupe du premier module 2 est en position haute la cuve ou jupe analogue du deuxième module 3 est en position basse.

Ainsi, la cuve principale 21 du premier module 2 comprend une première vanne 211 disposée en partie inférieure de ladite cuve principale 21 du côté opposé au deuxième module 3 et permettant le remplissage de ladite cuve principale 21 en la mettant en relation avec un premier réservoir 4 de liquide. Ladite cuve principale 21 comprend également une deuxième vanne 212 disposée sur son fond 213 du côté opposé au deuxième module 3 et permettant le vidage de ladite cuve principale 21 en la mettant en relation avec une première évacuation 214.

De même, la cuve principale 31 du deuxième module 3 comprend une première vanne 311 disposée en partie inférieure de ladite cuve principale 31 du côté opposé au premier module 2 et permettant le remplissage de ladite cuve principale 21 en la mettant en relation avec un deuxième réservoir 5 de liquide. Ladite cuve principale 31 comprend également une deuxième vanne 312 disposée sur son fond 313 du côté opposé au premier module 2 et permettant le vidage de ladite cuve principale 31 en la mettant en relation avec une deuxième évacuation 314.

Lesdits premier et deuxième réservoirs 4,5 sont avantageusement alimentés en continu ou de façon séquentielle par une source naturelle d'eau permettant de profiter d'une différence de niveau d'eau haute et basse entre les premier et deuxième réservoirs 4,5 et les première et deuxième évacuations 214,314 telle que, par exemple, une mer, un lac ou encore un cours d'eau.

Le système 1 de production d'énergie électrique comporte en outre entre les premier et deuxième modules 2,3 :
- une vanne inférieure 6 apte à mettre en relation les parties inférieures des cuves principales 21,31 respectives des premier et deuxième modules 2,3,
- une vanne supérieure 7 apte à mettre en relation les parties supérieures des cuves principales 21,31 respectives des premier et deuxième modules 2,3,
- un premier tube émissaire 8 disposé entre les deux vannes inférieure 6 et supérieure 7, et apte à mettre en relation sous certaines conditions les cuves ballasts internes 23,33 respectives des premier et deuxième modules 2,3,
- un deuxième tube émissaire 9 disposé en dessous de la vanne inférieure 6, et apte à mettre en relation les parties inférieures des jupes ballasts 24,34 respectives des premier et deuxième modules 2,3, et
- un tube d'évent 10 extensible reliant le dessus de la cuve ballast externe 22 du premier module 2 et le dessus de la cuve ballast externe 32 du deuxième module 3 de sorte à permettre le transfert de l'air contenu dans lesdites cuves ballasts externes 22,32 en fonction du remplissage ou du vidage de ces dernières.

La cuve ballast externe 22 du premier module 2 comprend une première vanne 221 disposée en partie inférieure de ladite cuve ballast externe 22 du côté opposé au deuxième module 3 et permettant le remplissage ou le vidage de la cuve ballast externe 22 en mettant en relation cette dernière et la cuve principale 21 du premier module 2.

En outre, la cuve ballast externe 22 du premier module 2 comprend du côté du deuxième module 3 :
- une deuxième vanne 222 inférieure permettant le vidage de la cuve ballast interne 23 du premier module 2 en mettant en relation, par l'intermédiaire du tube émissaire 8 sous certaines conditions, la partie inférieure de ladite cuve ballast interne 23 et la partie supérieure de la cuve ballast interne 33 du deuxième module 3, et
- une troisième vanne 223 supérieure permettant le remplissage de la cuve ballast interne 23 du premier module 2 en mettant en relation, par l'intermédiaire du tube émissaire 8 sous certaines conditions, la partie supérieure de ladite cuve ballast interne 23 et la partie inférieure de la cuve ballast interne 33 du deuxième module 3.

Par ailleurs, la cuve ballast interne 23 du premier module 2 comprend :
- un premier tube 231 s'étendant en partie inférieure de ladite cuve ballast interne 23 en direction du deuxième module 3 et permettant le vidage de ladite cuve ballast interne 22 en étant mis en relation, par l'intermédiaire de la deuxième vanne 222 et du tube émissaire 8 sous certaines conditions, avec la partie supérieure de la cuve ballast interne 33 du deuxième module 3, et
- un deuxième tube 232 s'étendant en partie supérieure de ladite cuve ballast interne 23 en direction du deuxième module 3 et permettant le remplissage de ladite cuve ballast interne 22 en étant mis en relation, par l'intermédiaire de la deuxième vanne 223 et du tube émissaire 8 sous certaines conditions, avec la partie inférieure de la cuve ballast interne 33 du deuxième module 3.

La jupe ballast 24 du premier module 2 est solidaire par sa face supérieure 241 du fond 224 de la cuve ballast externe 22 et est suspendue à cette dernière par des suspentes télescopiques non représentées, ces dernières étant de préférence du type hydraulique et comprenant des vérins pour permettre le déploiement et le repliement de ladite jupe ballast 24, celles-ci étant suspendues après la cuve ballast externe 22 pour en augmenter le volume d'eau utile.

Ladite jupe ballast 24 est à géométrie variable et comporte en partie inférieure un plancher 242 rigide et renforcé, sur lequel se fixent, outre les suspentes télescopiques, des bords latéraux 243 verticalement déformables, avantageusement en forme de soufflets, de sorte que les face supérieure 241 et plancher 242 peuvent soit se rapprocher afin d'envoyer le liquide qu'elle contient vers la jupe ballast 34 du deuxième module 3, ou soit s'éloigner afin de recevoir le liquide contenu dans ladite jupe ballast 34.

Enfin, la jupe ballast 24 du premier module 2 comprend une vanne, non représentée, disposée en partie inférieure de ladite jupe ballast 24 pour raccorder cette dernière au deuxième tube émissaire 9 et permettant le remplissage ou le vidage de la jupe ballast 24. Pour ce faire, le plancher 242 de ladite jupe ballast 24 est maintenu à distance fixe et constante du fond 213 de la cuve principale 21.

Par analogie avec le premier module 2, le deuxième module 3 est tel que sa cuve ballast externe 32 comprend une première vanne 321 disposée en partie inférieure de ladite cuve ballast externe 32 du côté opposé au premier module 2 et permettant le remplissage ou le vidage de ladite cuve ballast externe 32 en la mettant en relation cette dernière et la cuve principale 31 du deuxième module 3.

En outre, la cuve ballast externe 32 du deuxième module 3 comprend du côté du premier module 2 :
- une deuxième vanne 322 inférieure permettant le vidage de la cuve ballast interne 33 du premier module 2 en mettant en relation, par l'intermédiaire du tube émissaire 8 sous certaines conditions, la partie inférieure de ladite cuve ballast interne 33 et la partie supérieure de la cuve ballast interne 23 du premier module 2, et
- une troisième vanne 323 supérieure permettant le remplissage de la cuve ballast interne 33 du deuxième module 3 en mettant en relation, par l'intermédiaire du tube émissaire 8 sous certaines conditions, la partie supérieure de ladite cuve ballast interne 33 et la partie inférieure de la cuve ballast interne 23 du premier module 2.

Par ailleurs, la cuve ballast interne 33 du deuxième module 3 comprend :
- un premier tube 331 s'étendant en partie supérieure de ladite cuve ballast interne 33 en direction du premier module 2 et permettant le vidage de ladite cuve ballast interne 32 en étant mis en relation, par l'intermédiaire de la deuxième vanne 322 et du tube émissaire 8 sous certaines conditions, avec la partie supérieure de la cuve ballast interne 23 du premier module 2, et
- un deuxième tube 332 s'étendant en partie supérieure de ladite cuve ballast interne 33 en direction du premier module 2 et permettant le remplissage de ladite cuve ballast interne 32 en étant mis en relation, par l'intermédiaire de la deuxième vanne 323 et du tube émissaire 8 sous certaines conditions, avec la partie inférieure de la cuve ballast interne 23 du premier module 2.

La jupe ballast 34 du deuxième module 3 est solidaire par sa face supérieure 341 du fond 324 de la cuve ballast externe 32 et est suspendue à cette dernière par des suspentes télescopiques non représentées, ces dernières étant de préférence du type hydraulique et comprenant des vérins pour permettre le déploiement et le repliement de ladite jupe ballast 34, lesdites suspentes télescopiques étant suspendues après la cuve ballast externe 32 pour en augmenter le volume d'eau utile et donc la masse d'eau utile.

Les suspentes télescopiques du deuxième module 3 sont reliées hydrauliquement aux suspentes télescopiques du premier module 2 fonctionnant de façon antagoniste. Ainsi, au fur et à mesure que la cuve ballast externe 32 descendra, les suspentes hydrauliques, retenant la jupe ballast 34 du deuxième module 3, la maintiendront à distance fixe et constante du fond 313 de la cuve principale 31, et la liaison hydraulique permettra les mouvements inverses dans les suspentes télescopiques de la jupe ballast 34 du premier module 2.

Ladite jupe ballast 34 est à géométrie variable et comporte en partie inférieure un plancher 342 rigide et renforcé, sur lequel se fixent, outre les suspentes télescopiques, des bords latéraux 343 verticalement déformables, avantageusement en forme de soufflets, de sorte que les face supérieure 341 et plancher 342 peuvent soit se rapprocher afin d'envoyer le liquide qu'elle contient vers la jupe ballast 24 du premier module 2, ou soit s'éloigner afin de recevoir le liquide contenu dans ladite jupe ballast 24.

Enfin, la jupe ballast 34 du deuxième module 3 comprend une vanne, non représentée, disposée en partie inférieure de ladite jupe ballast 34 pour raccorder cette dernière au deuxième tube émissaire 9 et permettant le remplissage ou le vidage de la jupe ballast 34. Pour ce faire, comme décrit précédemment, le plancher 342 de ladite jupe ballast 34 est maintenu à distance fixe et constante du fond 313 de la cuve principale 31.

Le système 1 de production d'énergie électrique comporte également au moins des premiers dispositifs de transmission 12,13 reliant respectivement la cuve ballast externe 22,32 des premier et deuxième modules 2,3 à la cuve principale 21,31 associée, lesdits premiers dispositifs de transmission 12,13 permettant de démultiplier et de transmettre le mouvement alternatif vertical des cuves ballasts externes 22,32 associées à des alternateurs 14 pour produire du courant électrique.

En outre, ces premiers dispositifs de transmission 12,13 comportent chacun un organe de freinage, non représenté, permettant de bloquer en position chacune des cuves ballasts externes 22,32 et ne de pas permettre soit la remontée de ces dernières sous l'effet de la poussée d'Archimède lorsque le niveau d'eau dans la cuve principale 21,31 associée n'a pas atteint sa hauteur maximale, soit la descente de ces dernières sous l'effet de la gravité lorsque le niveau d'eau dans la cuve principale 21,31 associée n'a pas atteint sa hauteur minimale. A l'opposé, quand le niveau d'eau dans la cuve principale 21,31 est optimal, chaque organe de freinage permet à chacune des cuves ballasts externes 22,32 de descendre de façon verticale grâce à la force de gravité, ou de monter de façon verticale sous l'effet de la poussée d'Archimède.

Selon un mode de réalisation préféré non représenté, les premiers dispositifs de transmission 12,13 sont du type hydraulique et comportent chacun au moins un premier et un deuxième vérins aptes chacun à générer un fluide, avantageusement de l'huile, sous pression afin d'actionner un moteur hydraulique raccordé à un alternateur 14.

Le premier vérin comprend un corps cylindrique fixé sur le fond 213,313 respectif de ladite cuve principale 21,31 dans lequel est mobile un piston solidaire de la cuve ballast externe 22,32 associée et tributaire de ses mouvements verticaux de bas en haut et de haut en bas générés par la poussée d'Archimède et par la pesanteur.

Le deuxième vérin comprend un corps cylindrique fixé sur la face supérieure 215,315 respective de ladite cuve principale 21,31 dans lequel est mobile un piston solidaire de la cuve ballast externe 22,32 associée et tributaire de ses mouvements verticaux de bas en haut et de haut en bas générés par la poussée d'Archimède et par la pesanteur.

De manière avantageuse, le piston du premier vérin et le piston du deuxième vérin sont une seule et même pièce traversant la cuve ballast externe 22,32 associée.

Le fluide utilisé dans les premiers dispositifs de transmission 12,13 circule en circuit fermé. En effet, les premiers dispositifs de transmission 12 et 13 sont reliés entre eux par des circuits hydrauliques, non représentés, supportant de grandes pressions et permettant la liaison par l'huile du premier vérin de la cuve ballast externe 22 avec le premier vérin de la cuve ballast externe 32, de façon à ce que chaque longueur de circuit soit identique et que le synchronisme des mouvements soit parfait, quand la cuve ballast externe 22 descendra, la cuve ballast externe 32 montera.

Dans cette configuration, les organes de freinage sont une vanne-frein équipant les circuits hydrauliques et permettant d'ouvrir ou d'obturer totalement le passage du flux d'huile. Chaque vanne-frein est une vanne, par exemple du type papillon, positionnée en sortie de chaque premier et deuxième vérin et pouvant être obturée à 100% par asservissement. Cette vanne-frein peut être soit fermée afin de bloquer en position chacune des cuves ballasts externes 22,32, soit ouverte à 100% afin de permettre à chacune des cuves ballasts externes 22,32 de descendre ou de monter de façon verticale.

Par ailleurs, le système 1 de production d'énergie électrique comporte également au moins deux deuxièmes dispositifs de transmission 15,16 reliant respectivement la cuve ballast interne 23,33 des premier et deuxième modules 2,3 à la cuve ballast externe 22,32 associée, lesdits deuxièmes dispositifs de transmission 15,16 permettant de démultiplier et de transmettre le mouvement alternatif vertical des cuves ballasts internes 23,33 associées à des alternateurs 17 pour produire du courant électrique.

En outre, ces deuxièmes dispositifs de transmission 15,16 comportent chacun un organe de freinage, non représenté, permettant de bloquer en position chacune des cuves ballasts interne 23,33 et ne de pas permettre soit la remontée de ces dernières sous l'effet de la poussée d'Archimède lorsque le niveau d'eau dans la cuve ballast externe 22,32 associée n'a pas atteint sa hauteur maximale, soit la descente de ces dernières sous l'effet de la gravité lorsque le niveau d'eau dans la cuve ballast externe 22,32 associée n'a pas atteint sa hauteur minimale. A l'opposé, quand le niveau d'eau dans la cuve ballast externe 22,32 est optimal, chaque organe de freinage permet à chacune des cuves ballasts interne 23,33 de descendre de façon verticale grâce à la force de gravité, ou de monter de façon verticale sous l'effet de la poussée d'Archimède.

Selon un mode de réalisation préféré non représenté, les deuxièmes dispositifs de transmission 15,16 sont du type hydrauliques et comportent chacun au moins un premier et un deuxième vérins aptes chacun à générer un fluide, avantageusement de l'huile, sous pression afin d'actionner un moteur hydraulique raccordé à un alternateur 17.

Le premier vérin comprend un corps cylindrique fixé sur le fond 224,324 respectif de ladite cuve ballast externe 22,32 dans lequel est mobile un piston solidaire de la cuve ballast interne 23,33 associée et tributaire de ses mouvement verticaux de bas en haut et de haut en bas générés par la poussée d'Archimède et par la pesanteur.

Le deuxième vérin comprend un corps cylindrique fixé sur la face supérieure 225,325 respective de ladite cuve ballast externe 22,32 dans lequel est mobile un piston solidaire de la cuve ballast interne 23,33 associée et tributaire de ses mouvements verticaux de bas en haut et de haut en bas générés par la poussée d'Archimède et par la pesanteur.

De manière avantageuse, le piston du premier vérin et le piston du deuxième vérin sont une seule et même pièce traversant la cuve ballast externe 22,32 associée.

Le fluide utilisé dans les deuxièmes dispositifs de transmission 15,16 circule en circuit fermé. En effet, les premier et deuxième vérins des deuxièmes dispositifs de transmission 15 et 16 sont reliés entre eux par des circuits hydrauliques, non représentés, supportant de grandes pressions.

Dans cette configuration, les organes de freinage sont une vanne-frein équipant les circuits hydrauliques et permettant d'ouvrir ou d'obturer totalement le passage du flux d'huile. Chaque vanne-frein est une vanne, par exemple du type papillon, positionnée en sortie de chaque premier et deuxième vérin et pouvant être obturée à 100% par asservissement. Cette vanne-frein peut être soit fermée afin de bloquer en position chacune des cuves ballasts internes 23,33, soit ouverte à 100% afin de permettre à chacune des cuves ballasts internes 23,33 de descendre ou de monter de façon verticale.

Sans sortir de la présente invention, les cuves ballasts internes 23,33 respectives des premier et deuxième modules 2,3 peuvent comporter un tube d'évent, non représenté sur les figures, mettant en relation lesdites cuves ballasts internes 23,33 respectivement avec les cuves principales 21,31 pour permettre un transfert de l'air lors du vidage ou du remplissage desdites cuves ballasts internes 23,33.

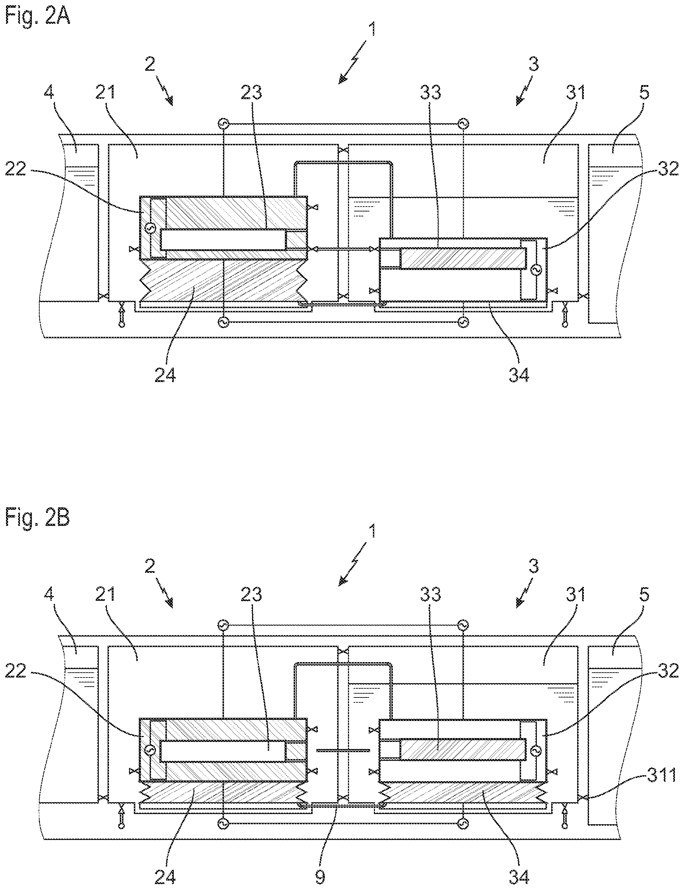

On va à présent décrire, en référence aux figures 2A à 2N, les différentes séquences d'un cycle de production d'énergie mettant en oeuvre le système 1 de production d'énergie électrique conforme à l'invention comprenant un ensemble premier et deuxième modules 2,3.

Ainsi, en référence à la figure 2A, la première étape est une situation dans laquelle, d'une part, le premier module 2 est tel que sa cuve principale 21 est vide, sa cuve ballast externe 22 est remplie et bloquée en position haute, sa cuve ballast interne 23 est vide et bloquée en position basse et sa jupe ballast 24 est remplie et entièrement déployée et, d'autre part, le deuxième module 3 est tel que sa cuve principale 31 est pratiquement pleine, sa cuve ballast externe 32 est vide et bloquée en position basse, sa cuve ballast interne 33 est remplie et bloquée en position haute et sa jupe ballast 24 est vide et entièrement repliée, le blocage en position des différentes cuves étant obtenu grâce aux vannes-freins associées.

Les positions haute et basse des cuves ballasts externes 22,32 et internes 23,33 sont des positions relatives par rapport aux éléments qui les contiennent, à savoir respectivement les cuves principales 21,31 et les cuves ballasts externes 22,32.

En référence à la figure 2B, la cuve ballast externe 22 n'est plus bloquée et descend par gravité en exerçant une pression sur la jupe ballast 24 qui tend à envoyer le liquide qu'elle contient vers la jupe ballast 34 grâce aux deuxième tube émissaire 9 et vannes associées. La cuve ballast interne 23 n'est plus bloquée et remonte sous l'effet de la poussée d'Archimède. Par ailleurs, la cuve principale 31 continue à se remplir grâce au liquide contenu dans le deuxième réservoir 5 et passant par la première vanne 311. La cuve ballast externe 32 n'est plus bloquée et remonte sous l'effet de la poussée d'Archimède et du déploiement de la jupe ballast 34 qui se remplit. La cuve ballast interne 33 n'est plus bloquée et descend par gravité.

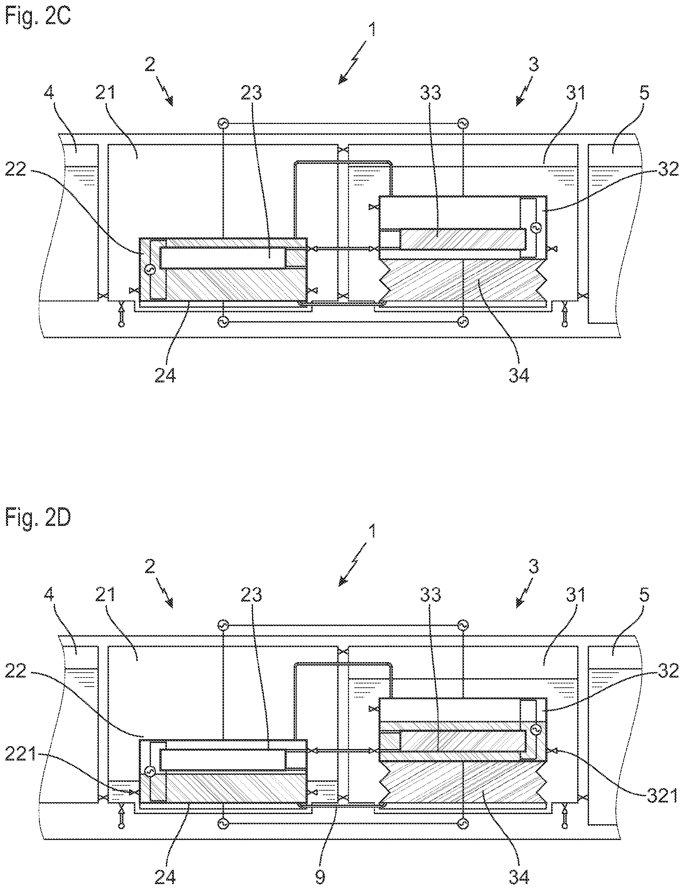

En référence à la figure 2C, le premier module 2 est à présent tel que sa cuve ballast externe 22 est remplie et en position basse, sa cuve ballast interne 23 est vide et en position haute et sa jupe ballast 24 est vide et entièrement repliée. Le deuxième module 3 est à présent tel que sa cuve principale 31 est entièrement pleine, son niveau de liquide est à la même altitude que celui du deuxième réservoir 5 selon le principe des vases communicants, sa cuve ballast externe 32 est vide et bloquée en position haute, sa cuve ballast interne 33 est remplie et en position basse et sa jupe ballast 34 est remplie et entièrement déployée.

En référence à la figure 2D, la première vanne 221 est ouverte ce qui permet à la cuve ballast externe 22 de se vider dans la cuve principale 21, les cuves ballasts externe 22 et interne 23 étant respectivement bloquées en position basse et en position haute. La première vanne 321 est ouverte ce qui permet à la cuve principale 31 de se vider et de remplir la cuve ballast externe 32, les cuves ballasts externe 32 et interne 33 étant respectivement bloquées en position haute et en position basse. L'air contenu dans la cuve ballast externe 32 est envoyé, par le biais du tube d'évent 10, dans la cuve ballast externe 22 pour faciliter les remplissage et vidage respectifs desdites cuves ballasts externes 32,22.

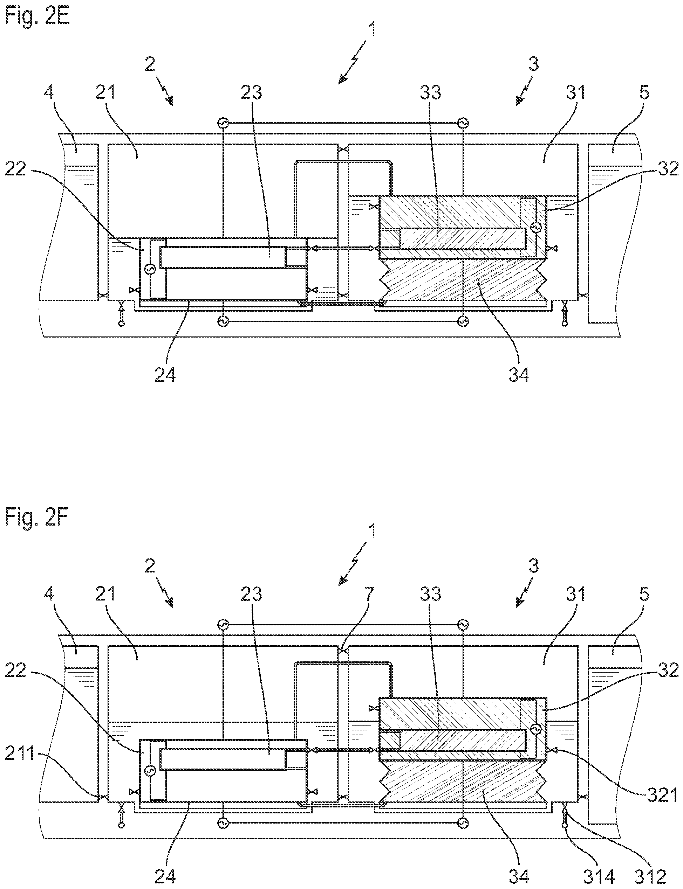

En référence à la figure 2E, le premier module 2 est à présent tel que sa cuve principale 21 est en partie remplie, sa cuve ballast externe 22 est vide et bloquée en position basse, sa cuve ballast interne 23 est vide et bloquée en position haute et sa jupe ballast 24 est vide et entièrement repliée. Le deuxième module 3 est à présent tel que sa cuve principale 31 est en partie remplie, sa cuve ballast externe 32 est pleine et bloquée en position haute, sa cuve ballast interne 33 est pleine et bloquée en position basse et sa jupe ballast 34 est remplie et entièrement déployée.

En référence à la figure 2F, la première vanne 211 est ouverte ce qui permet au premier réservoir 4 de continuer à remplir la cuve principale 21, les cuves ballasts externe 22 et interne 23 étant respectivement bloquées en position basse et en position haute. La deuxième vanne 312 est ouverte ce qui permet à la cuve principale 31 de continuer à se vider par la deuxième évacuation 314, les cuves ballasts externe 32 et interne 33 étant respectivement bloquées en position haute et en position basse. L'air contenu dans la cuve principale 21 est envoyé, par le biais de la vanne supérieure 7, dans la cuve principale 31 pour faciliter les remplissage et vidage respectifs desdites cuves principales 21,31.

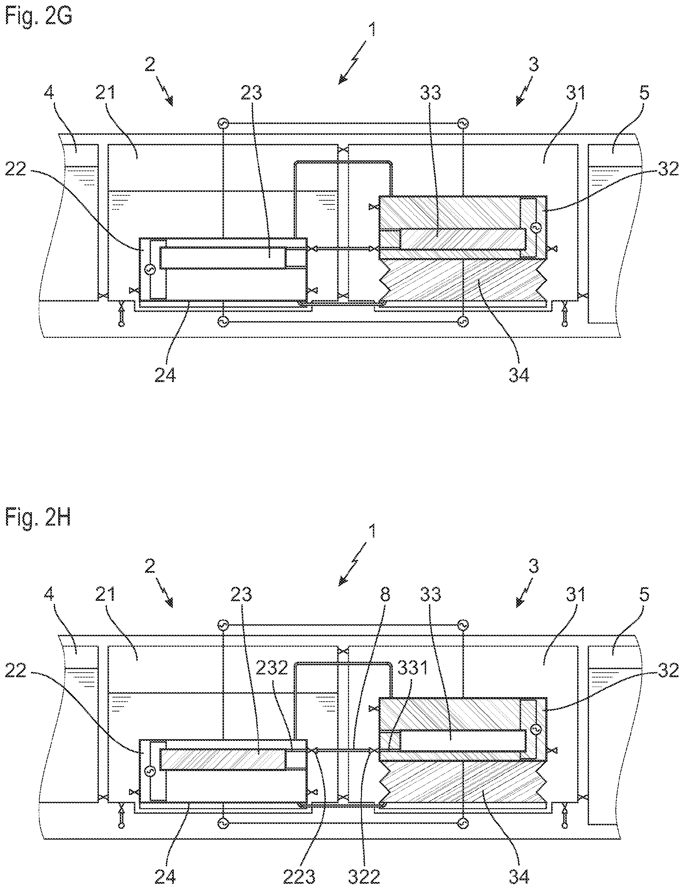

En référence à la figure 2G, le premier module 2 est à présent tel que sa cuve principale 21 est pratiquement remplie, sa cuve ballast externe 22 est vide et bloquée en position basse, sa cuve ballast interne 23 est vide et bloquée en position haute et sa jupe ballast 24 est vide et entièrement repliée. Le deuxième module 3 est à présent tel que sa cuve principale 31 est entièrement vide, sa cuve ballast externe 32 est pleine et bloquée en position haute, sa cuve ballast interne 33 est pleine et bloquée en position basse et sa jupe ballast 34 est remplie et entièrement déployée.

En référence à la figure 2H, les premier et deuxième modules 2,3 sont tels que le deuxième tube 232 de la cuve ballast interne 23, la troisième vanne 223 de la cuve ballast externe 22, le premier tube émissaire 8, la deuxième vanne 322 de la cuve ballast externe 32 et le premier tube 331 de la cuve ballast interne 33 sont configurés pour mettre en relation les cuves ballasts interne 23 et 33. Les troisième et deuxième vannes 223 et 322 sont ouvertes ce qui permet à la cuve ballast interne 33 de se vider entièrement dans la cuve ballast interne 23. Une fois la cuve ballast interne 23 entièrement remplie, les troisième et deuxième vannes 223 et 322 sont fermées.

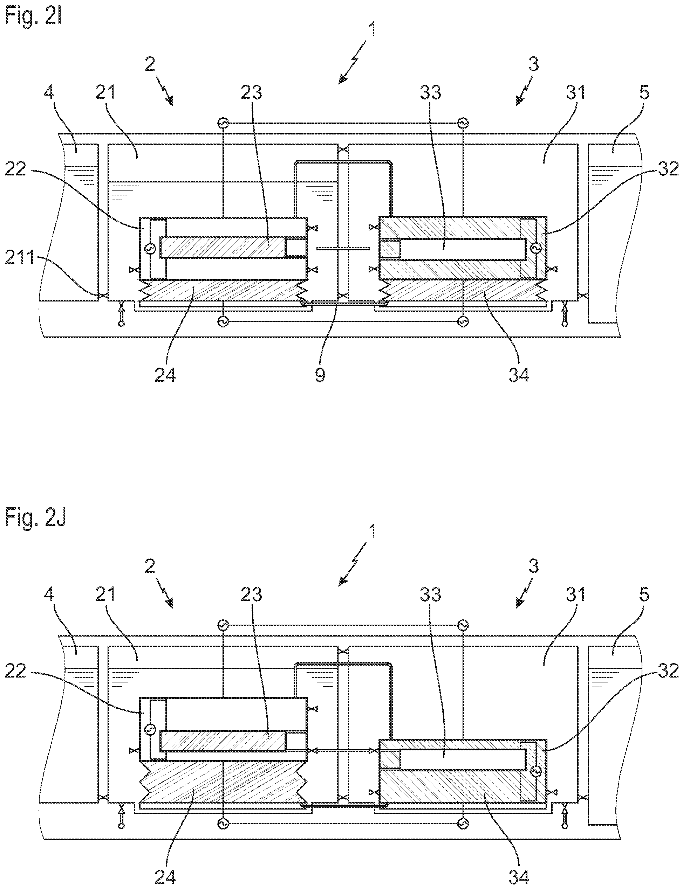

En référence à la figure 2I, la cuve ballast externe 32 n'est plus bloquée et descend par gravité en exerçant une pression sur la jupe ballast 34 qui tend à envoyer le liquide qu'elle contient vers la jupe ballast 24 grâce aux deuxième tube émissaire 9 et vannes associées. La cuve ballast interne 33 n'est plus bloquée et remonte sous l'effet de la poussée d'Archimède. Par ailleurs, la cuve principale 21 continue à se remplir grâce au liquide contenu dans le premier réservoir 4 et passant par la première vanne 211. La cuve ballast externe 22 n'est plus bloquée et remonte sous l'effet de la poussée d'Archimède et du déploiement de la jupe ballast 24 qui se remplit. La cuve ballast interne 23 n'est plus bloquée et descend par gravité.

En référence à la figure 2J, le deuxième module 3 est à présent tel que sa cuve ballast externe 32 est remplie et en position basse, sa cuve ballast interne 33 est vide et en position haute et sa jupe ballast 34 est vide et entièrement repliée. Le premier module 2 est à présent tel que sa cuve principale 21 est entièrement pleine, son niveau de liquide est à la même altitude que celui du premier réservoir 4 selon le principe des vases communicants, sa cuve ballast externe 22 est vide et bloquée en position haute, sa cuve ballast interne 23 est remplie et en position basse et sa jupe ballast 24 est remplie et entièrement déployée.

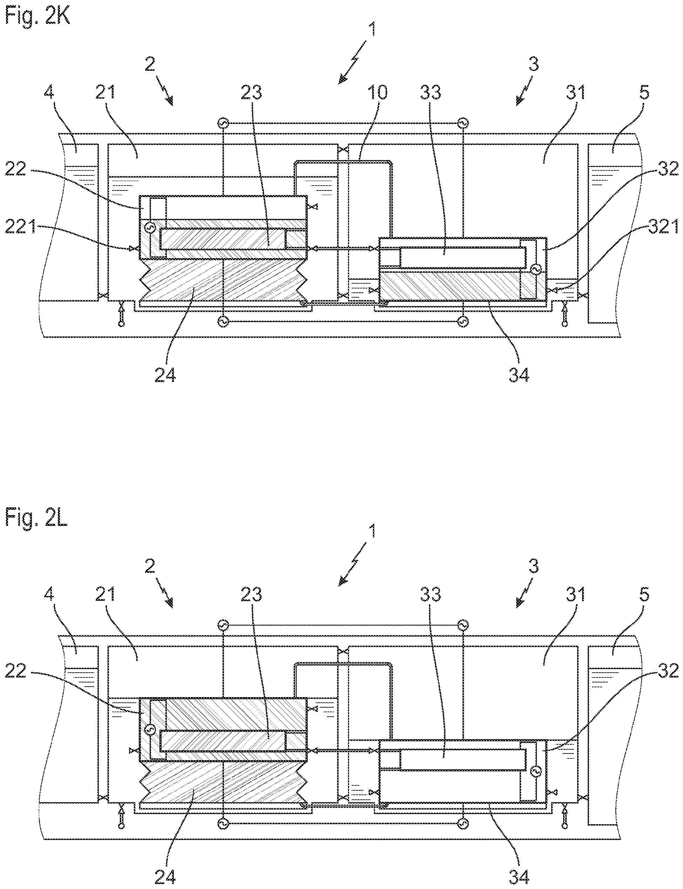

En référence à la figure 2K, la première vanne 321 est ouverte ce qui permet à la cuve ballast externe 32 de se vider dans la cuve principale 31, les cuves ballasts externe 32 et interne 33 étant respectivement bloquées en position basse et en position haute. La première vanne 221 est ouverte ce qui permet à la cuve principale 21 de se vider et de remplir la cuve ballast externe 22, les cuves ballasts externe 22 et interne 23 étant respectivement bloquées en position haute et en position basse. L'air contenu dans la cuve ballast externe 22 est envoyé, par le biais du tube d'évent 10, dans la cuve ballast externe 32 pour faciliter les remplissage et vidage respectifs desdites cuves ballasts externes 22,32.

En référence à la figure 2L, le deuxième module 3 est à présent tel que sa cuve principale 31 est en partie remplie, sa cuve ballast externe 32 est vide et bloquée en position basse, sa cuve ballast interne 33 est vide et bloquée en position haute et sa jupe ballast 24 est vide et entièrement repliée. Le premier module 2 est à présent tel que sa cuve principale 21 est en partie remplie, sa cuve ballast externe 22 est pleine et bloquée en position haute, sa cuve ballast interne 23 est pleine et bloquée en position basse et sa jupe ballast 24 est remplie et entièrement déployée.

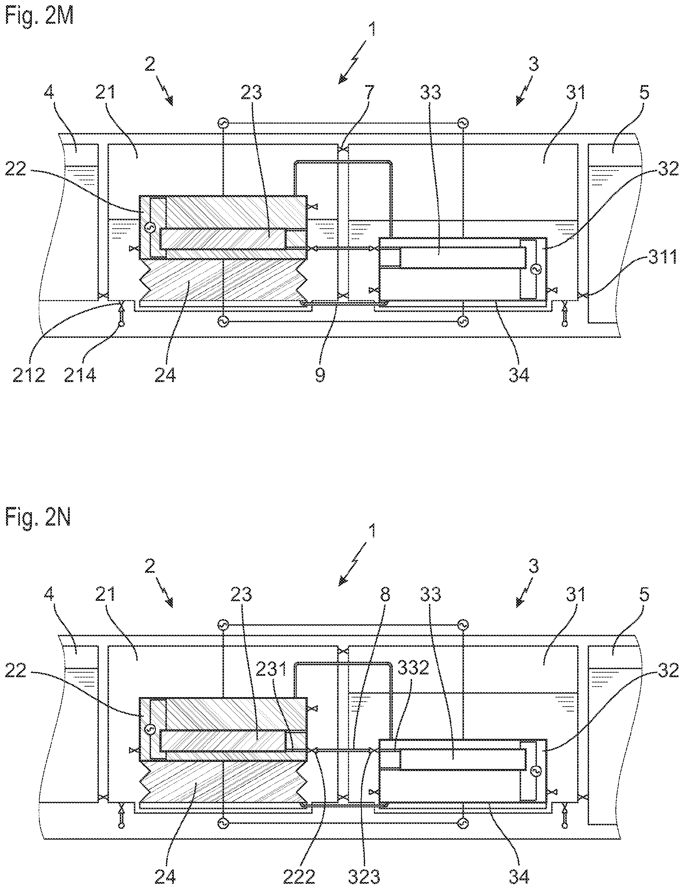

En référence à la figure 2M, la première vanne 311 est ouverte ce qui permet au deuxième réservoir 5 de continuer à remplir la cuve principale 31, les cuves ballasts externe 32 et interne 33 étant respectivement bloquées en position basse et en position haute. La deuxième vanne 212 est ouverte ce qui permet à la cuve principale 21 de continuer à se vider par la première évacuation 214, les cuves ballasts externe 22 et interne 23 étant respectivement bloquées en position haute et en position basse. L'air contenu dans la cuve principale 31 est envoyé, par le biais de la vanne supérieure 7, dans la cuve principale 21 pour faciliter les remplissage et vidage respectifs desdites cuves principales 31,21.

En référence à la figure 2N, le premier module 2 est à présent tel que sa cuve principale 21 est pratiquement remplie, sa cuve ballast externe 22 est vide et bloquée en position basse, sa cuve ballast interne 23 est vide et bloquée en position haute et sa jupe ballast 24 est vide et entièrement repliée. Le deuxième module 3 est à présent tel que sa cuve principale 31 est entièrement vide, sa cuve ballast externe 32 est pleine et bloquée en position haute, sa cuve ballast interne 33 est pleine et bloquée en position basse et sa jupe ballast 24 est remplie et entièrement déployée. Dans cette situation, les premier et deuxième modules 2,3 sont tels que le premier tube 231 de la cuve ballast interne 23, la deuxième vanne 222 de la cuve ballast externe 22, le premier tube émissaire 8, la troisième vanne 323 de la cuve ballast externe 32 et le deuxième tube 332 de la cuve ballast interne 33 sont configurés pour mettre en relation les cuves ballasts internes 23 et 33.

Enfin, pour revenir à la situation de la figure 2A, il suffit d'ouvrir les deuxième et troisième vannes 222 et 323 afin de permettre à la cuve ballast interne 23 de se vider entièrement dans la cuve ballast interne 33. Une fois la cuve ballast interne 33 entièrement remplie, les troisième et deuxième vannes 223 et 322 sont fermées.

En référence à la figure 1, on comprend bien que les mouvements relatifs, de va-et-vient entre leur position haute et basse, des cuves ballasts externes 22,32 et internes 23,33 à l'intérieur respectivement des cuves principales 21,31 et des cuves ballasts externes 22,32 génèrent du courant électrique grâce aux premiers 12,13 et deuxièmes dispositifs de transmission 15,16 et leurs alternateurs 14,17 associés.

Selon un mode de réalisation avantageux, le système 1 de production d'énergie électrique conforme à l'invention comprend une pluralité d'ensembles premier et deuxième modules 2,3. Dans cette configuration, il est intéressant de mettre en oeuvre un décalage séquentiel entre chacun desdits ensembles. Ledit décalage séquentiel consiste à décaler, d'au moins une séquence, le mouvement des éléments d'un premier ensemble par rapport au mouvement des éléments d'un deuxième ensemble, le mouvement des éléments de ce dernier étant également décalé par rapport au mouvement des éléments d'un troisième ensemble, et ainsi de suite, afin de rendre plus constante la production d'énergie, et de supprimer les pics et les creux de production.

De plus, selon une variante de réalisation non représentée, le système 1 de production d'énergie électrique conforme à l'invention peut comprendre, pour accroître encore la production d'énergie, des dispositifs additionnels de production d'énergie.

Ainsi, on peut utiliser l'énergie thermique obtenue grâce à l'échauffement du fluide hydraulique associé aux premiers et deuxièmes vérins des premiers 12,13 et deuxièmes dispositifs de transmission 15,16 pour produire de l'eau chaude qui peut :
- en période froide, alimenter un chauffage collectif, des serres ou encore des industries dédiées, et
- en période chaude où le chauffage collectif n'est plus nécessaire, alimenter des moteurs à énergie externe, du type Stirling par exemple, couplés à des alternateurs à des fins de production électrique.

En effet, on sait que le but d'un moteur à énergie externe est de produire à partir de l'énergie thermique, celle de l'eau chaude desdits premiers et deuxièmes vérins des premiers 12,13 et deuxièmes dispositifs de transmission 15,16, de l'énergie mécanique servant à entraîner avantageusement un alternateur.

De même, chacune des vannes du système 1 de production d'énergie électrique, notamment chacune des premières 211,311 et deuxièmes vannes 212,312 des cuves principales 21,31, des premières 221,321 et deuxièmes vannes 222,322 des cuves ballasts externes 22,32, et des vannes inférieure 6 et supérieure 7, qu'elle soit hydraulique ou aéraulique, est couplée à un alternateur, représenté uniquement sur la figure 1 afin de ne pas surcharger les autres figures.

De même, de manière avantageuse, le premier tube émissaire 8, le deuxième tube émissaire 9 et le tube d'évent 10 comportent également et respectivement une turbine 81,91,101 couplée à un alternateur, représenté uniquement sur la figure 1 afin de ne pas surcharger les autres figures.

Enfin, on comprend bien que le système 1 de production d'énergie électrique selon l'invention est particulièrement intéressant, facile à mettre en oeuvre et non polluant. En effet, il ne nécessite qu'une source d'eau pour alimenter de façon continue les premier et deuxième réservoirs 4,5 afin que ses derniers aient un niveau sensiblement constant. En outre, ledit système 1 ne produit aucune pollution puisque ses circuits hydrauliques sont fermés et que l'eau utilisée pour faire bouger les différents éléments des premier et deuxième modules 2,3 ne subit aucun traitement particulier ni aucune élévation de température. Enfin, le système 1 peut également produire de l'eau chaude pour alimenter un bâtiment industriel ou d'habitation.

### Description d'autres modes de réalisation

Selon une variante de réalisation, non représentée, le système 1 de production d'énergie électrique, selon l'invention, comporte en outre, sur la cuve ballast externe 22,32 respective de chacun des premier et deuxième modules 2,3, une jupe ballast supérieure à géométrie variable disposée au-dessus de ladite cuve ballast externe 22,32 et apte à être remplie ou vidée de liquide pour se déployer ou se replier verticalement. Chaque jupe ballast supérieure est solidaire par sa face inférieure de la face supérieure 225,325 respective de ladite cuve ballast externe 22,32 associée et est suspendue par des suspentes télescopiques non représentées, ces dernières étant de préférence du type hydraulique et comprenant des vérins pour permettre le déploiement et le repliement de ladite jupe ballast supérieure, celles-ci étant solidaires de la cuve ballast externe 22 pour en augmenter le volume d'eau utile.

Ladite jupe ballast supérieure à géométrie variable est semblable à la jupe ballast 24,34 précédemment décrite, nommée alors jupe ballast inférieure, et comporte en partie supérieure un plafond rigide et renforcé, sur lequel se fixent, outre les suspentes télescopiques, des bords latéraux verticalement déformables, avantageusement en forme de soufflets, de sorte que ses face inférieure et plafond peuvent soit se rapprocher afin d'expulser le liquide qu'elle contient, ou soit s'éloigner afin de recevoir du liquide.

Les jupes ballasts inférieure 24,34 et supérieure d'une cuve ballast externe 22,32 communiquent entre elles par des colonnes permettant à l'eau et à l'air de passer de la jupe inférieure 24,34 à la jupe supérieure et inversement. Les échanges d'eau et d'air s'opèrent également entre les jupes variables par antagonisme, ce qui signifie que, quand les jupes ballasts inférieure 24,34 et supérieure d'un premier module 2 seront remplies d'eau, les jupes ballasts inférieure 24,34 et supérieure du deuxième module 3 seront remplies d'air.

En conséquence, dans le cas d'utilisation, par le premier 2 ou deuxième module 3, de la force générée par la gravité, la cuve ballast externe 22 respectivement 32 va descendre verticalement grâce à la jupe ballast inférieure 24 respectivement 34, qui va se rétracter au fur et à mesure de la descente verticale, donc perdre de la masse, mais qui sera compensée totalement par le déploiement vertical de bas en haut de la jupe ballast supérieure, qui recevra l'eau de la jupe ballast inférieure 24 respectivement 34 via les colonnes de communication, ladite jupe ballast supérieure contiendra ainsi une masse identique à celle perdue par la jupe ballast inférieure 24 respectivement 34.

Par conséquent, le total des masses d'eau et volumes d'air contenus dans les jupes ballasts inférieure 24,34 et supérieure d'un module 2,3 sont toujours les mêmes, une des jupes étant toujours le complément de l'autre.

Les jupes variables pourront communiquer entre elles dans l'optique de l'économie d'eau, c'est-à-dire qu'une fois la cuve principale et sa jupe inférieure remplie d'eau aura atteint le point mort bas, l'ensemble pourra se vider (à 50%) dans l'ensemble jupe principale et jupe variable vide d'eau, parvenu au point mort haut, puis l'excédent d'eau sera évacué.

Cette variante de réalisation est particulièrement avantageuse car elle permet d'additionner, d'une part, des masses d'eau importantes à chaque cuve ballast externe 22,32 pour augmenter la puissance obtenue grâce à la gravité et, d'autre part, de volumes d'air importants à la cuve ballast externe 32,22 pour augmenter la puissance obtenue par la poussée d'Archimède.

### Possibilité d'application industrielle

On comprend bien que le système 1 de production d'énergie électrique selon l'invention est de préférence installé à proximité immédiate d'un fleuve dans lequel on prélève en amont de l'eau pour alimenter les premier et deuxième réservoirs 4,5 et on rejette en aval l'eau évacuée des premier et deuxième modules 2,3 par les première et deuxième évacuations 214,314. Toutefois, on comprend bien que ledit système 1 de production d'énergie électrique peut également être installé à proximité de toute autre source d'eau telles que, par exemple, un lac ou une mer.

Enfin, il va de soi que les exemples de système 1 de production d'énergie électrique conformes à l'invention qui viennent d'être décrits ne sont que des illustrations particulières, en aucun cas limitatives de l'invention.

## Revendications

1. Système (1) de production d'énergie électrique comportant au moins un ensemble comprenant un premier module (2) et un deuxième module (3), fonctionnant de manière antagoniste, lesdits premier et deuxième modules (2,3) étant identiques, symétriques et comprenant chacun respectivement une cuve principale (21,31) raccordée respectivement, d'une part, à un premier (4) ou deuxième réservoir (5) de liquide et, d'autre part, à une première ou deuxième évacuation (214,314), et apte à être remplie dudit liquide ou vidée, ledit système étant **caractérisé en ce que** lesdits premier et deuxième modules (2,3) comprennent chacun respectivement :
- une cuve ballast externe (22,32) apte à être remplie du liquide contenu dans la cuve principale (21,31) ou vidée pour se déplacer à l'intérieur de la cuve principale (21,31),
- une cuve ballast interne (23,33) apte à être remplie ou vidée du liquide contenu dans la cuve ballast interne (33,23) de l'autre module pour se déplacer à l'intérieur de la cuve ballast externe (22,32),
- une jupe ballast (24,34) suspendue à ladite cuve ballast externe (22,32) et apte à être remplie ou vidée du liquide contenu dans la jupe ballast (34,24) de l'autre module pour se déployer ou se replier verticalement,
- des premiers dispositifs de transmission (12,13) reliant la cuve ballast externe (22,32) à la cuve principale (21,31) et permettant de transmettre le mouvement des cuves ballasts externes (22,32) à des alternateurs (14), et
- des deuxièmes dispositifs de transmission (15,16) reliant la cuve ballast interne (23,33) à la cuve ballast externe (22,32) et permettant de transmettre le mouvement des cuves ballasts internes (23,33) à des alternateurs (17).

2. Système (1) selon la revendication 1 **caractérisé en ce que** chacun des premiers et deuxièmes dispositifs de transmission (12,13,15,16) comportent au moins un organe de freinage.

3. Système (1) selon l'une quelconque des revendications 1 ou 2 **caractérisé en ce qu'**il comporte entre les premier et deuxième modules (2,3) :
- une vanne inférieure (6) apte à mettre en relation les parties inférieures des cuves principales (21) et (31),
- une vanne supérieure (7) apte à mettre en relation les parties supérieures des cuves principales (21) et (31),
- un premier tube émissaire (8) disposé entre les deux vannes inférieure (6) et supérieure (7), et apte à mettre en relation sous certaines conditions les cuves ballasts internes (23) et (33),
- un deuxième tube émissaire (9) disposé en dessous de la vanne inférieure (6), et apte à mettre en relation les parties inférieures des jupes ballasts (24) et (34), et
- un tube d'évent (10) extensible reliant les dessus des cuves ballasts externes (22) et (32) de sorte à permettre le transfert de l'air contenu dans lesdites cuves ballasts externes (22,32) en fonction du remplissage ou du vidage de ces dernières.

4. Système (1) selon l'une quelconque des revendications 1 à 3, **caractérisé en ce que** la cuve principale (21,31) comporte :
- une première vanne (211,311) disposée en partie inférieure permettant le remplissage de ladite cuve principale (21,31) en la mettant en relation avec un premier, respectivement deuxième, réservoir (4,5),
- une deuxième vanne (212,312) disposée sur son fond (213,313) et permettant le vidage de cette dernière en la mettant en relation avec la première, respectivement deuxième, évacuation (214,314).

5. Système (1) selon l'une quelconque des revendications 3 ou 4, **caractérisé en ce que** la cuve ballast externe (22,32) comprend :
- une première vanne (221,321) disposée en partie inférieure et permettant le remplissage ou le vidage de la cuve ballast externe (22,32) en la mettant en relation avec la cuve principale (21,31),
- une deuxième vanne (222,322) inférieure permettant le vidage de la cuve ballast interne (23,33) en mettant en relation, par l'intermédiaire du tube émissaire (8) sous certaines conditions, la partie inférieure de ladite cuve ballast interne (23,33) et la partie supérieure de la cuve ballast interne (33,23), et
- une troisième vanne (223,323) supérieure permettant le remplissage de la cuve ballast interne (23,33) en mettant en relation, par l'intermédiaire du tube émissaire (8) sous certaines conditions, la partie supérieure de ladite cuve ballast interne (23,33) et la partie inférieure de la cuve ballast interne (33,23).

6. Système (1) selon la revendication 5 **caractérisé en ce que** la cuve ballast interne (23,33) comprend :
- un premier tube (231,331) s'étendant en partie inférieure et permettant le vidage de ladite cuve ballast interne (23,33) en mettant en relation, par l'intermédiaire de la deuxième vanne (222,322) et du tube émissaire (8) sous certaines conditions, avec la partie supérieure de la cuve ballast interne (33,23),
- un deuxième tube (232,332) s'étendant en partie supérieure et permettant le remplissage de ladite cuve ballast interne (23,33) en la mettant en relation, par l'intermédiaire de la deuxième vanne (223,323) et du tube émissaire (8) sous certaines conditions, avec la partie inférieure de la cuve ballast interne (33,23), et
- un évent mettant en relation ladite cuve ballast interne (23,33) respectivement avec les cuves principales (21,31).

7. Système (1) selon l'une quelconque des revendications 3 à 6, **caractérisé en ce que** la jupe ballast (24,34) comprend une vanne disposée en partie inférieure pour la raccorder au deuxième tube émissaire (9) et permettant le remplissage ou le vidage de la jupe ballast (24,34).

8. Système (1) selon les revendications 4 à 7, **caractérisé en ce que** la jupe ballast (24,34), qui comporte en partie inférieure un plancher (242,342) rigide et des bords latéraux (243,343) verticalement déformables, est solidaire par sa face supérieure (241,341) du fond (224,324) de la cuve ballast externe (22,32) et est suspendue à cette dernière par des suspentes télescopiques fixées sur le plancher (242,342) de sorte à maintenir ce dernier à distance fixe et constante du fond (213,313) de la cuve principale (21,31).

9. Système (1) selon l'une quelconque des revendications 1 à 8, **caractérisé en ce que** les premiers dispositifs de transmission (12,13) sont du type hydraulique et comportent chacun au moins un premier et un deuxième vérins aptes chacun à générer un fluide sous pression afin d'actionner un moteur hydraulique raccordé à l'alternateur (14), ledit premier vérin comprenant un corps cylindrique fixé sur le fond (213,313) respectif de la cuve principale (21,31) dans lequel est mobile un piston solidaire de la cuve ballast externe (22,32) associée, le deuxième vérin comprenant un corps cylindrique fixé sur la face supérieure (215,315) respective de ladite cuve principale (21,31) dans lequel est mobile un piston solidaire de la cuve ballast externe (22,32) associée, les premier et deuxième vérins de la cuve ballast externe (22) étant reliés par des circuits hydrauliques avec les premier et deuxième vérins de la cuve ballast externe (32).

10. Système (1) selon l'une quelconque des revendications 1 à 9, **caractérisé en ce que** les deuxièmes dispositifs de transmission (15,16) sont du type hydrauliques et comportent chacun au moins un premier et un deuxième vérins aptes chacun à générer un fluide sous pression afin d'actionner un moteur hydraulique raccordé à l'alternateur (17), ledit premier vérin comprenant un corps cylindrique fixé sur le fond (224,324) respectif de ladite cuve ballast externe (22,32) dans lequel est mobile un piston solidaire de la cuve ballast interne (23,33) associée, ledit deuxième vérin comprend un corps cylindrique fixé sur la face supérieure (225,325) respective de ladite cuve ballast externe (22,32) dans lequel est mobile un piston solidaire de la cuve ballast interne (23,33) associée, les premier et deuxième vérins de la cuve ballast externe (22,32) étant reliés entre eux par des circuits hydrauliques.

11. Système (1) selon l'une quelconque des revendications 9 ou 10, **caractérisé en ce que** l'organe de freinage des premiers et deuxièmes dispositifs de transmission (12,13,15,16) est une vanne-frein équipant leurs circuits hydrauliques.

12. Système (1) selon l'une quelconque des revendications 1 à 11, **caractérisé en ce qu'**il comporte une pluralité d'ensembles comprenant un premier module (2) et un deuxième module (3) et **en ce que** le mouvement des éléments du premier desdits ensembles est décalé séquentiellement par rapport au mouvement des éléments du deuxième ensemble, le mouvement des éléments de ce dernier étant décalé séquentiellement par rapport au mouvement des éléments du troisième ensemble, et ainsi de suite.

13. Système (1) selon l'une quelconque des revendications 1 à 12, **caractérisé en ce que** chacune des premières (211,311) et deuxièmes vannes (212,312) des cuves principales (21,31), des premières (221,321) et deuxièmes vannes (222,322) des cuves ballasts externes (22,32) et des vannes inférieure (6) et supérieure (7) est couplée à un alternateur.

14. Système (1) selon l'une quelconque des revendications 1 à 13, **caractérisé en ce que** lesdits premier et deuxième modules (2,3) comprennent chacun respectivement une jupe ballast supérieure disposée sur le dessus de la cuve ballast externe (22,32) et apte à être remplie ou vidée du liquide contenu dans la jupe ballast (24,34), nommée alors jupe ballast inférieure, du même module pour se déployer ou se replier verticalement.

15. Système (1) selon la revendication 14, **caractérisé en ce que** la jupe ballast supérieure, qui comporte en partie supérieure un plafond rigide et des bords latéraux verticalement déformables, est solidaire par sa face inférieure à la cuve ballast externe (22,32) et est suspendue par des suspentes télescopiques fixées sur ladite cuve ballast externe (22,32).

## Patentansprüche

1. System (1) zur Erzeugung elektrischer Energie, umfassend mindestens eine Einheit, die ein erstes Modul (2) und ein zweites Modul (3) beinhaltet, die gegenläufig funktionieren, wobei das erste und zweite Modul (2, 3) identisch und symmetrisch sind und jedes jeweils einen Hauptbehälter (21, 31) beinhaltet, der jeweils einerseits an einen ersten (4) oder zweiten Flüssigkeitstank (5) und andererseits an einen ersten oder zweiten Ablauf (214, 314) angeschlossen ist, und der geeignet ist, mit der Flüssigkeit gefüllt oder geleert zu werden, wobei das System **dadurch gekennzeichnet ist, dass** das erste und zweite Modul (2, 3) jedes jeweils beinhalten:
- einen externen Ballastbehälter (22, 32), der geeignet ist, mit der Flüssigkeit, die in dem Hauptbehälter (21, 31) enthalten ist, gefüllt oder geleert zu werden, um sich im Inneren des Hauptbehälters (21, 31) zu bewegen,
- einen internen Ballastbehälter (23, 33), der geeignet ist, mit der Flüssigkeit, die in dem internen Ballastbehälter (33, 23) des anderen Moduls enthalten ist, gefüllt oder geleert zu werden, um sich im Inneren des externen Ballastbehälters (22, 32) zu bewegen,
- eine Ballastschürze (24, 34), die an dem externen Ballastbehälter (22, 32) aufgehängt und geeignet ist, mit der Flüssigkeit, die in der Ballastschürze (34, 24) des anderen Moduls enthalten ist, gefüllt oder geleert zu werden, um vertikal auszufahren oder einzufahren,
- erste Übertragungsvorrichtungen (12, 13), die den externen Ballastbehälter (22, 32) mit dem Hauptbehälter (21, 31) verbinden und es ermöglichen, die Bewegung der externen Ballastbehälter (22, 32) auf Wechselstromgeneratoren (14) zu übertragen, und
- zweite Übertragungsvorrichtungen (15, 16), die den internen Ballastbehälter (23, 33) mit dem externen Ballastbehälter (22, 32) verbinden und es ermöglichen, die Bewegung der internen Ballastbehälter (23, 33) auf Wechselstromgeneratoren (17) zu übertragen.

2. System (1) nach Anspruch 1, **dadurch gekennzeichnet, dass** jede der ersten und zweiten Übertragungsvorrichtungen (12, 13, 15, 16) mindestens ein Bremsglied umfasst.

3. System (1) nach einem der Ansprüche 1 oder 2, **dadurch gekennzeichnet, dass** es zwischen dem ersten und zweiten Modul (2, 3) umfasst:
- ein unteres Ventil (6), das geeignet ist, die unteren Teile der Hauptbehälter (21) und (31) in Verbindung zu bringen,
- ein oberes Ventil (7), das geeignet ist, die oberen Teile der Hauptbehälter (21) und (31) in Verbindung zu bringen,
- ein erstes Vorflutrohr (8), das zwischen dem unteren (6) und dem oberen Ventil (7) angeordnet und geeignet ist, unter bestimmten Bedingungen die internen Ballastbehälter (23) und (33) in Verbindung zu bringen,
- ein zweites Vorflutrohr (9), das unterhalb des unteren Ventils (6) angeordnet und geeignet ist, die unteren Teile der Ballastschürzen (24) und (34) in Verbindung zu bringen, und
- ein ausdehnbares Entlüftungsrohr (10), das die Oberseiten der externen Ballastbehälter (22) und (32) so verbindet, dass die Übertragung von Luft, die in den externen Ballastbehältern (22, 32) enthalten ist, je nach Füllung oder Leerung dieser Letzteren ermöglicht wird.

4. System (1) nach einem der Ansprüche 1 bis 3, **dadurch gekennzeichnet, dass** der Hauptbehälter (21, 31) umfasst:
- ein erstes Ventil (211, 311), das in dem unteren Teil angeordnet ist und die Füllung des Hauptbehälters (21, 31) ermöglicht, indem es ihn mit einem ersten beziehungsweise zweiten Tank (4, 5) in Verbindung bringt,
- ein zweites Ventil (212, 312), das auf seinem Grund (213, 313) angeordnet ist und die Leerung dieses Letzteren ermöglicht, indem es ihn mit dem ersten beziehungsweise zweiten Ablauf (214, 314) in Verbindung bringt.

5. System (1) nach einem der Ansprüche 3 oder 4, **dadurch gekennzeichnet, dass** der externe Ballastbehälter (22, 32) beinhaltet:
- ein erstes Ventil (221, 321), das in dem unteren Teil angeordnet ist und die Füllung oder die Leerung des externen Ballastbehälters (22, 32) ermöglicht, indem es ihn mit dem Hauptbehälter (21, 31) in Verbindung bringt,
- ein zweites unteres Ventil (222, 322), das die Leerung des internen Ballastbehälters (23, 33) ermöglicht, indem es, mittels des Vorflutrohres (8) unter bestimmten Bedingungen, den unteren Teil des internen Ballastbehälters (23, 33) und den oberen Teil des internen Ballastbehälters (33, 23) in Verbindung bringt, und
- ein drittes oberes Ventil (223, 323), das die Füllung des internen Ballastbehälters (23, 33) ermöglicht, indem es, mittels des Vorflutrohres (8) unter bestimmten Bedingungen, den oberen Teil des internen Ballastbehälters (23, 33) und den unteren Teil des internen Ballastbehälters (33, 23) in Verbindung bringt.

6. System (1) nach Anspruch 5, **dadurch gekennzeichnet, dass** der interne Ballastbehälter (23, 33) beinhaltet:
- ein erstes Rohr (231, 331), das sich in dem unteren Teil erstreckt und die Leerung des internen Ballastbehälters (23, 33) ermöglicht, indem es ihn, mittels des zweiten Ventils (222, 322) und des Vorflutrohres (8) unter bestimmten Bedingungen, mit dem oberen Teil des internen Ballastbehälters (33, 23) in Verbindung bringt,
- ein zweites Rohr (232, 332), das sich in dem oberen Teil erstreckt und die Füllung des internen Ballastbehälters (23, 33) ermöglicht, indem es ihn, mittels des zweiten Ventils (223, 323) und des Vorflutrohres (8) unter bestimmten Bedingungen, mit dem unteren Teil des internen Ballastbehälters (33, 23) in Verbindung bringt, und
- eine Entlüftung, die den internen Ballastbehälter (23, 33) jeweils mit den Hauptbehältern (21, 31) in Verbindung bringt.

7. System (1) nach einem der Ansprüche 3 bis 6, **dadurch gekennzeichnet, dass** die Ballastschürze (24, 34) ein Ventil beinhaltet, das in dem unteren Teil angeordnet ist, um sie an das zweite Vorflutrohr (9) anzuschließen, und das die Füllung oder die Leerung der Ballastschürze (24, 34) ermöglicht.

8. System (1) nach den Ansprüchen 4 bis 7, **dadurch gekennzeichnet, dass** die Ballastschürze (24, 34), die in dem unteren Teil einen starren Boden (242, 342) und vertikal verformbare Seitenränder (243, 343) umfasst, durch ihre obere Fläche (241, 341) fest mit dem Grund (224, 324) des externen Ballastbehälters (22, 32) verbunden ist und an diesem Letzteren durch Teleskopprofile, die an dem Boden (242, 342) fixiert sind, aufgehängt ist, sodass dieser Letztere in einem feststehenden und konstanten Abstand von dem Grund (213, 313) des Hauptbehälters (21, 31) gehalten wird.

9. System (1) nach einem der Ansprüche 1 bis 8, **dadurch gekennzeichnet, dass** die ersten Übertragungsvorrichtungen (12, 13) hydraulischer Art sind und jeweils mindestens einen ersten und einen zweiten Zylinder umfassen, die jeweils geeignet sind, ein druckbeaufschlagtes Fluid zu erzeugen, um einen Hydraulikmotor zu betätigen, der an den Wechselstromgenerator (14) angeschlossen ist, wobei der erste Zylinder einen zylindrischen Körper beinhaltet, der auf dem jeweiligen Grund (213, 313) des Hauptbehälters (21, 31) fixiert ist, in dem ein Kolben beweglich ist, der fest mit dem zugehörigen externen Ballastbehälter (22, 32) verbunden ist, wobei der zweite Zylinder einen zylindrischen Körper beinhaltet, der auf der jeweiligen oberen Fläche (215, 315) des Hauptbehälters (21, 31) fixiert ist, in dem ein Kolben beweglich ist, der fest mit dem zugehörigen externen Ballastbehälter (22, 32) verbunden ist, wobei der erste und zweite Zylinder des externen Ballastbehälters (22) durch Hydraulikkreisläufe mit dem ersten und zweiten Zylinder des externen Ballastbehälters (32) verbunden sind.

10. System (1) nach einem der Ansprüche 1 bis 9, **dadurch gekennzeichnet, dass** die zweiten Übertragungsvorrichtungen (15, 16) hydraulischer Art sind und jeweils mindestens einen ersten und einen zweiten Zylinder umfassen, die jeweils geeignet sind, ein druckbeaufschlagtes Fluid zu erzeugen, um einen Hydraulikmotor zu betätigen, der an den Wechselstromgenerator (17) angeschlossen ist, wobei der erste Zylinder einen zylindrischen Körper beinhaltet, der auf dem jeweiligen Grund (224, 324) des externen Ballastbehälters (22, 32) fixiert ist, in dem ein Kolben beweglich ist, der fest mit dem zugehörigen internen Ballastbehälter (23, 33) verbunden ist, wobei der zweite Zylinder einen zylindrischen Körper beinhaltet, der auf der jeweiligen oberen Fläche (225, 325) des externen Ballastbehälters (22, 32) fixiert ist, in dem ein Kolben beweglich ist, der fest mit dem zugehörigen internen Ballastbehälter (23, 33) verbunden ist, wobei der erste und zweite Zylinder des externen Ballastbehälters (22, 32) durch Hydraulikkreisläufe miteinander verbunden sind.

11. System (1) nach einem der Ansprüche 9 oder 10, **dadurch gekennzeichnet, dass** das Bremsglied der ersten und zweiten Übertragungsvorrichtungen (12, 13, 15, 16) ein Bremsventil ist, mit dem ihre Hydraulikkreisläufe ausgestattet sind.

12. System (1) nach einem der Ansprüche 1 bis 11, **dadurch gekennzeichnet, dass** es eine Vielzahl von Einheiten umfasst, die ein erstes Modul (2) und ein zweites Modul (3) beinhalten, und dadurch, dass die Bewegung der Elemente der ersten der Einheiten sequenziell versetzt ist in Bezug auf die Bewegung der Elemente der zweiten Einheit, wobei die Bewegung der Elemente dieser Letzteren sequenziell versetzt ist in Bezug auf die Bewegung der Elemente der dritten Einheit und so weiter.

13. System (1) nach einem der Ansprüche 1 bis 12, **dadurch gekennzeichnet, dass** jedes der ersten (211, 311) und zweiten Ventile (212, 312) der Hauptbehälter (21, 31), der ersten (221, 321) und zweiten Ventile (222, 322) der externen Ballastbehälter (22, 32) und des unteren (6) und oberen Ventils (7) an einen Wechselstromgenerator gekoppelt ist.

14. System (1) nach einem der Ansprüche 1 bis 13, **dadurch gekennzeichnet, dass** das erste und zweite Modul (2, 3) jedes jeweils eine obere Ballastschürze beinhalten, die auf der Oberseite des externen Ballastbehälters (22, 32) angeordnet und geeignet ist, mit der Flüssigkeit, die in der Ballastschürze (24, 34), nun untere Ballastschürze genannt, des gleichen Moduls enthalten ist, gefüllt oder geleert zu werden, um vertikal auszufahren oder einzufahren.

15. System (1) nach Anspruch 14, **dadurch gekennzeichnet, dass** die obere Ballastschürze, die in dem oberen Teil eine starre Decke und vertikal verformbare Seitenränder umfasst, durch ihre obere Fläche fest mit dem externen Ballastbehälter (22, 32) verbunden ist und durch Teleskopprofile, die an dem externen Ballastbehälter (22, 32) fixiert sind, aufgehängt ist.

## Claims

1. System (1) for production of electric energy comprising at least one unit comprising a first module (2) and a second module (3), operating antagonistically, said first and second module (2,3) being identical, symmetrical and each respectively comprising a main tank (21,31) connected respectively, on the one hand, to a first (4) or second tank (5) of liquid and, on the other hand, to a first or second evacuation (214,314), and capable of being filled with said liquid or emptied, said system being **characterised in that** said first and second module (2,3) each respectively comprise:
- an outer ballast tank (22,32) capable of being filled with the liquid contained in the main tank (21,31) or emptied in order to move inside of the main tank (21,31),
- an inner ballast tank (23,33) capable of being filled with or emptied of the liquid contained in the inner ballast tank (33,23) of the other module in order to move inside of the outer ballast tank (22,32),
- a ballast skirt (24,34) suspended from said outer ballast tank (22,32) and capable of being filled with or emptied of the liquid contained in the ballast skirt (34,24) of the other module in order to be deployed or retracted vertically,
- first transmission devices (12,13) connecting the outer ballast tank (22,32) to the main tank (21,31) and allowing to transmit the movement of the outer ballasts tanks (22,32) to alternators (14), and
- second transmission devices (15,16) connecting the inner ballast tank (23,33) to the outer ballast tank (22,32) and allowing to transmit the movement of the inner ballasts tanks (23,33) to alternators (17).

2. System (1) according to claim 1, **characterised in that** each of the first and second transmission devices (12,13,15,16) comprise at least one braking member.

3. System (1) according to any one of claims 1 or 2, **characterised in that** it comprises between the first and second module (2,3):
- a lower valve (6) capable of linking the lower portions of the main tanks (21) and (31),
- an upper valve (7) capable of linking the upper portions of the main tanks (21) and (31),
- a first outlet tube (8) disposed between the two valves, lower (6) and upper (7), and capable of linking under certain conditions the inner ballasts tanks (23) and (33),
- a second outlet tube (9) disposed below the lower valve (6), and capable of linking the lower portions of the ballasts skirts (24) and (34), and
- an extensible vent tube (10) connecting the tops of the outer ballasts tanks (22) and (32) in such a way as to allow the transfer of the air contained in said outer ballasts tanks (22,32) according to the filling or the emptying of the latter.

4. System (1) according to any one of claims 1 to 3, **characterised in that** the main tank (21,31) comprises:
- a first valve (211,311) disposed in the lower portion allowing the filling of said main tank (21,31) by linking it to a first, respectively second, tank (4,5),
- a second valve (212,312) disposed on its bottom (213,313) and allowing the emptying of the latter by linking it to the first, respectively second, evacuation (214,314).

5. System (1) according to any one of claims 3 or 4, **characterised in that** the outer ballast tank (22,32) comprises:
- a first valve (221,321) disposed in the lower portion and allowing the filling or the emptying of the outer ballast tank (22,32) by linking it to the main tank (21,31),
- a second lower valve (222,322) allowing the emptying of the inner ballast tank (23,33) by linking, via the outlet tube (8) under certain conditions, the lower portion of said inner ballast tank (23,33) and the upper portion of the inner ballast tank (33,23), and
- a third upper valve (223,323) allowing the filling of the inner ballast tank (23,33) by linking, via the outlet tube (8) under certain conditions, the upper portion of said inner ballast tank (23,33) and the lower portion of the inner ballast tank (33,23).

6. System (1) according to claim 5, **characterised in that** the inner ballast tank (23,33) comprises:
- a first tube (231,331) extending in the lower portion and allowing the emptying of said inner ballast tank (23,33) by linking, via the second valve (222,322) and the outlet tube (8) under certain conditions, to the upper portion of the inner ballast tank (33,23),
- a second tube (232,332) extending in the upper portion and allowing the filling of said inner ballast tank (23,33) by linking it, via the second valve (223,323) and the outlet tube (8) under certain conditions, to the lower portion of the inner ballast tank (33,23), and
- a vent linking said inner ballast tank (23,33) respectively to the main tanks (21,31).

7. System (1) according to any one of claims 3 to 6, **characterised in that** the ballast skirt (24,34) comprises a valve disposed in the lower portion in order to connect it to the second outlet tube (9) and allowing the filling or the emptying of the ballast skirt (24,34).

8. System (1) according to any one of claims 4 to 7, **characterised in that** the ballast skirt (24,34), which comprises in the lower portion a rigid floor (242,342) and vertically deformable lateral edges (243,343), is rigidly connected by its upper face (241,341) to the bottom (224,324) of the outer ballast tank (22,32) and is suspended from the latter by telescopic hangers fastened onto the floor (242,342) in such a way as to maintain the latter at a fixed and constant distance from the bottom (213,313) of the main tank (21,31).

9. System (1) according to any one of claims 1 to 8, **characterised in that** the first transmission devices (12,13) are of the hydraulic type and each comprise at least a first and a second cylinder each capable of generating a pressurised fluid in order to actuate a hydraulic motor connected to the alternator (14), said first cylinder comprising a cylindrical body fastened onto the respective bottom (213,313) of the main tank (21,31) in which a piston rigidly connected to the associated outer ballast tank (22,32) is mobile, the second cylinder comprising a cylindrical body fastened onto the respective upper face (215,315) of said main tank (21,31) in which a piston rigidly connected to the associated outer ballast tank (22,32) is mobile, the first and second cylinder of the outer ballast tank (22) being connected by hydraulic circuits to the first and second cylinder of the outer ballast tank (32).

10. System (1) according to any one of claims 1 to 9, **characterised in that** the second transmission devices (15,16) are of the hydraulic type and each comprise at least a first and a second cylinder each capable of generating a pressurised fluid in order to actuate a hydraulic motor connected to the alternator (17), said first cylinder comprising a cylindrical body fastened onto the respective bottom (224,324) of said outer ballast tank (22,32) in which a piston rigidly connected to the associated inner ballast tank (23,33) is mobile, said second cylinder comprises a cylindrical body fastened onto the respective upper face (225,325) of said outer ballast tank (22,32) in which a piston rigidly connected to the associated inner ballast tank (23,33) is mobile, the first and second cylinder of the outer ballast tank (22,32) being connected to each other by hydraulic circuits.

11. System (1) according to any one of claims 9 or 10, **characterised in that** the braking member of the first and second transmission devices (12,13,15,16) is a valve-brake provided in their hydraulic circuits.

12. System (1) according to any one of claims 1 to 11, **characterised in that** it comprises a plurality of units comprising a first module (2) and a second module (3) and **in that** the movement of the elements of the first of said units is sequentially offset with respect to the movement of the elements of the second unit, the movement of the elements of the latter being sequentially offset with respect to the movement of the elements of the third unit, and so on.

13. System (1) according to any one of claims 1 to 12, **characterised in that** each of the first (211,311) and second valves (212,312) of the main tanks (21,31), of the first (221,321) and second valves (222,322) of the outer ballasts tanks (22,32) and of the lower (6) and upper (7) valve is coupled to an alternator.

14. System (1) according to any one of claims 1 to 13, **characterised in that** said first and second module (2,3) each respectively comprise an upper ballast skirt disposed on top of the outer ballast tank (22,32) and capable of being filled with or emptied of the liquid contained in the ballast skirt (24,34), thus called lower ballast skirt, of the same module in order to be deployed or retracted vertically.

15. System (1) according to claim 14, **characterised in that** the upper ballast skirt, which comprises in the upper portion a rigid ceiling and vertically deformable lateral edges, is rigidly connected by its lower face to the outer ballast tank (22,32) and is suspended by telescopic hangers fastened onto said outer ballast tank (22,32).
